# EUROPEAN PATENT SPECIFICATION

(11) **EP 3 216 727 B1**
(45) Date of publication and mention of the grant of the patent: **17.02.2021**
(21) Application number: 17158928.6
(22) Date of filing: 02.03.2017
(51) Int. Cl.: B65G 47/31, B65G 51/02, A24C 5/32

(54) **CIGARETTE MAKING LINE AND METHOD FOR PNEUMATICALLY TRANSFERRING ROD-SHAPED ELEMENTS IN A CIGARETTE MAKING LINE**
ZIGARETTENFERTIGUNGSSLINIE UND VERFAHREN ZUR PNEUMATISCHEN ÜBERTRAGUNG VON STABFÖRMIGEN ELEMENTE IN EINER ZIGARETTENFERTIGUNGSSLINIE
LIGNE DE FABRICATION DE CIGARETTES DE TRANSFERT ET METHODE DE TRANSFERT PNEUMATIQUE D'ELEMENTS EN FORME DE TIGE DANS UNE LIGNE DE FABRICATION DE CIGARETTES

(30) Priority: 07.03.2016 IT UA20161374
(43) Date of publication of application: 13.09.2017
(73) Proprietor: G.D S.p.A., 40133 Bologna (IT)
(72) Inventor: BERTOLDI, Stefano, 40012 CALDERARA DI RENO (Bologna) (IT); EUSEPI, Ivan, 40013 CASTELMAGGIORE (Bologna) (IT); SARTONI, Massimo, 40139 BOLOGNA (IT)
(74) Representative: Bianciardi, Ezio

(56) References cited:
- GB-A- 322 374
- GB-A- 814 385
- GB-A- 2 153 775
- JP-B1- S4 827 835
- US-A- 3 062 588
- US-A- 3 222 110
- US-A- 3 404 921
- US-A- 3 490 717
- US-A- 4 915 547
- US-B1- 6 210 080

## Description

This invention relates to a cigarette making line and a method for pneumatically transferring rod-shaped elements in a cigarette making line.

The use of pneumatic conveyors, in particular for transferring filters between two sections of a cigarette machine, is well known for example from US3062588, which discloses a cigarette making line according to the preamble of claim 1, and a pneumatic transfer method for transferring rod-shaped elements according to the preamble of claim 12.

In some cases, the pneumatic tubing used for conveying the filters is very long (200 - 300 m), depending on the layout of the installation. Obviously, the longer the pneumatic conveyor tubing is, the higher the pressure required to supply the volume of air needed to sustain the pneumatic conveying system from end to end.

Under these conditions, the Applicant has found that reaching or exceeding certain pressure thresholds can lead to damage to the filters. In particular in the case of composite filters, the segments making up the filters can move out of place. The Applicant has also found that the acetate ends of the filter are damaged by the propulsive force of the air jet.

This invention has for an aim to provide a cigarette making line and a method for pneumatically transferring rod-shaped elements in a cigarette making line to overcome the above mentioned drawbacks of known conveying systems.

More specifically, the aim of this invention is to provide a cigarette making line and a method for pneumatically transferring rod-shaped elements in a cigarette making line in such a way as not to damage the rod-shaped elements, even in cases where transfer involves covering long distances.

Provided according to the invention are a cigarette making line and a method for pneumatically transferring rod-shaped elements in a cigarette making line according to what is set out in the accompanying claims.

The invention is described below with reference to the accompanying drawings, which illustrate a non-limiting embodiment of it and in which:
- Figure 1 schematically illustrates a cigarette making line according to this invention;
- Figure 2 is a schematic perspective view of the detail X from Figure 1, according to a first embodiment;
- Figure 3 is a schematic perspective view of the detail X from Figure 1, according to a second embodiment;

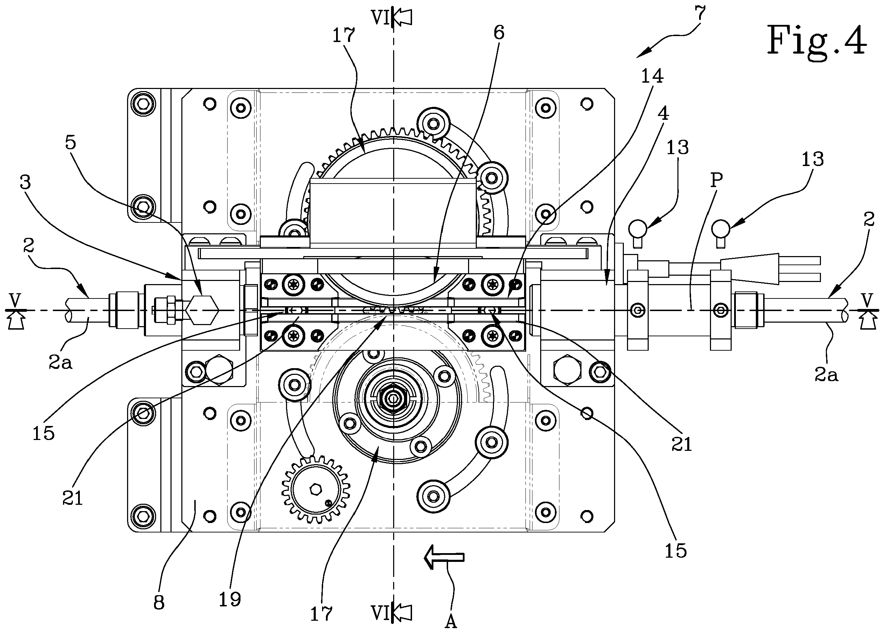

- Figure 4 is a top view of the detail X of Figure 3;

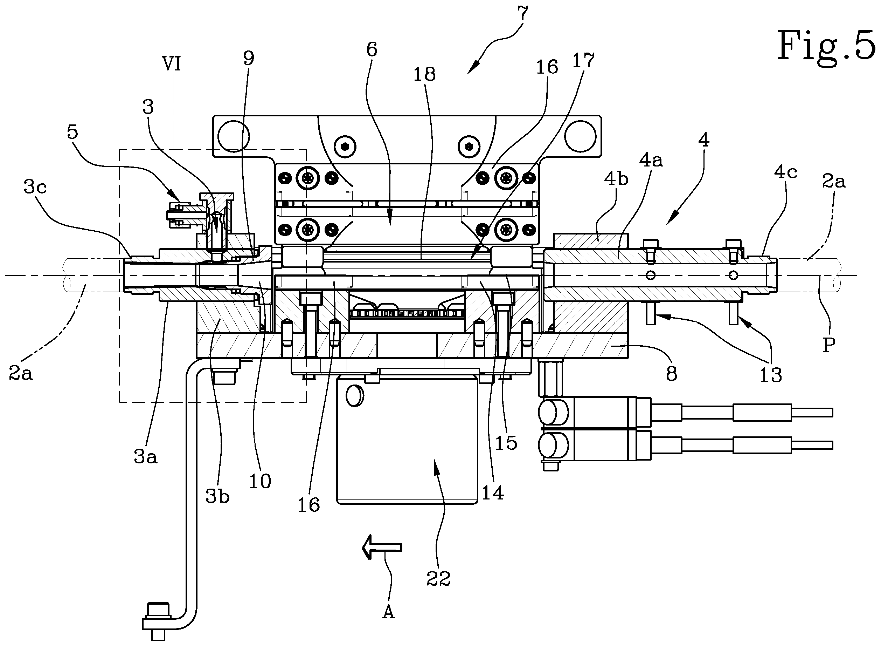

- Figure 5 is a cross sectional view of the detail X through the line V-V of Figure 4;
- Figure 6 is an enlarged view of the detail VI from Figure 5;

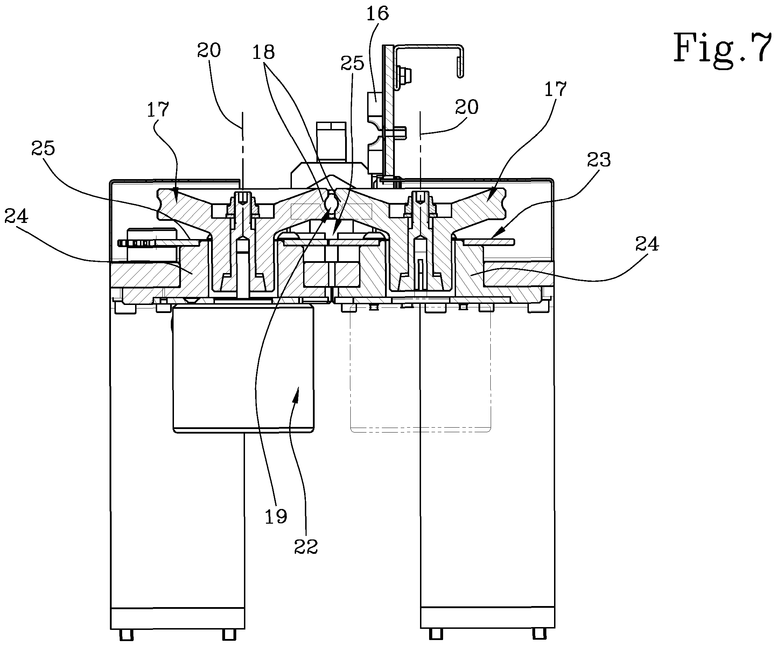

- Figure 7 is a cross sectional view of the detail X through the line VII-VII of Figure 4.

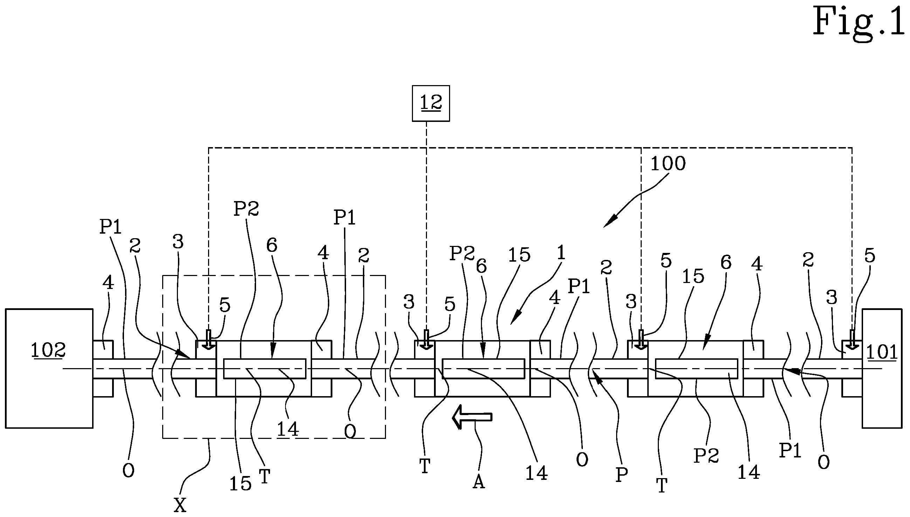

With reference to Figure 1, the numeral 100 denotes in its entirety a cigarette making line comprising a pneumatic transfer line 1 for transferring rod-shaped elements, located between two sections of the making line 100. The pneumatic transfer line 1 is configured to move a sequence of rod-shaped elements along a path "P" in a travel direction indicated by the arrow "A". The path "P" may be of any shape and length.

The term "rod-shaped elements" is used to mean axisymmetric elements having the shape of rods, bars, or sticks. More specifically, this description hereinafter refers to cigarette filters but without thereby limiting the scope of the invention. In this case, with reference to the cigarette making line illustrated in Figure 1, the pneumatic transfer line 1 is located, for example, between a filter making machine 101 or a filter reservoir and a filter tip attachment machine 102 or a reservoir connected to a filter tip attachment machine.

The pneumatic transfer line 1 comprises a plurality of pneumatic ducts 2 located in succession along the path "P". Each pneumatic duct 2 extends between a receiving station 3 and an arrival station 4 and defines within it a working stretch "O" of the path "P".

The pneumatic transfer line 1 also comprises receiving and relaying means located at the receiving station 3. The receiving and relaying means are configured to receive the filters in sequence and comprise at least one injector 5 configured to inject a compressed fluid, in particular compressed air, into the respective pneumatic duct 2 at the receiving station 3.

Along the working stretch "O", therefore, the compressed fluid injected into the respective pneumatic duct 2 expands and produces a pneumatic feeding action by which the filters are moved forward.

As a result of injecting the compressed fluid, the working stretch "O" is subjected to a pressure P1 which is higher than the pressure outside the environment in which the pneumatic transfer line 1 is located, in particular higher than atmospheric pressure.

Two consecutive working stretches "O" are alternated with a transfer stretch "T" of the path "P" extending between the arrival station 3 of one pneumatic duct 2 and the receiving station 4 of the pneumatic duct 2 located immediately downstream in the travel direction "A".

The transfer stretch "T" is in communication with an environment outside the pneumatic ducts 2, in particular with the environment in which the pneumatic transfer line 1 is located. Preferably, the transfer stretch "T" is in communication with an outside environment which is subjected to a pressure P2 lower than the pressure P1. More specifically, P2 is equal to atmospheric pressure.

In other words, between the arrival station 4 of one pneumatic duct 2 and the receiving station 3 of the pneumatic duct 2 located immediately downstream of it, there is a break which makes the pneumatic ducts 2 independent of each other and preferably at a certain distance such as to produce a zone at pressure P2. Preferably, the transfer stretch "T" extends for a length greater than the length of the filters. In other words, the arrival station 3 of one pneumatic duct 2 and the receiving station 4 of the pneumatic duct 2 located immediately downstream in the travel direction "A" are located at a distance which is greater than the length of the filters. Between the arrival station 4 of one pneumatic duct 2 and the receiving station 3 of the pneumatic duct 2 located immediately downstream in the travel direction "A" there are transfer means 6 configured at least to mechanically guide the filters and to define the transfer stretch "T". The zone at pressure P2 is thus occupied at least partly by the transfer means 6.

The numeral 7 denotes a unit which incorporates the arrival station 4 of a pneumatic duct 2, the receiving station 3 of the pneumatic duct 2 immediately downstream of it and the zone at pressure P2, in particular the transfer means 6. Preferably, the unit 7 comprises a support 8 adapted to be placed between two consecutive pneumatic ducts 2. Preferably, the receiving station 3 and the arrival station 4 are made, for example, in the form of lengths of rigid ducts, labelled 3a and 4a respectively, mounted on the support 8, for example by means of supporting blocks 3b, 4b, and comprising fittings 3c, 4c for respective flexible ducts 2a.

In a possible embodiment, the receiving and relaying means comprise a funnel 9 disposed axially of the pneumatic duct 2 at the receiving station 3. In this case, the injector 5 is preferably located downstream of the funnel 9 in the travel direction "A". More specifically, the funnel 9 is the infeed section of the pneumatic duct 2 at the receiving station 3.

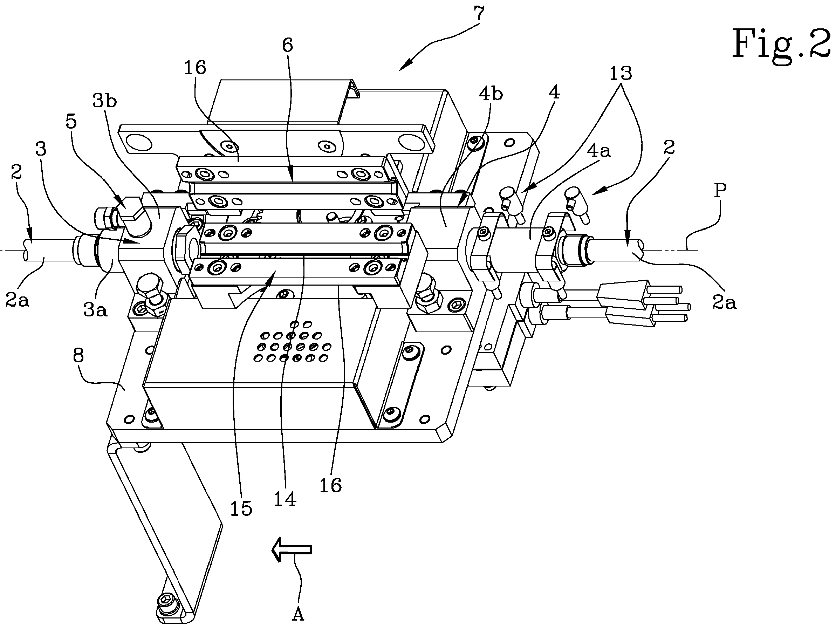

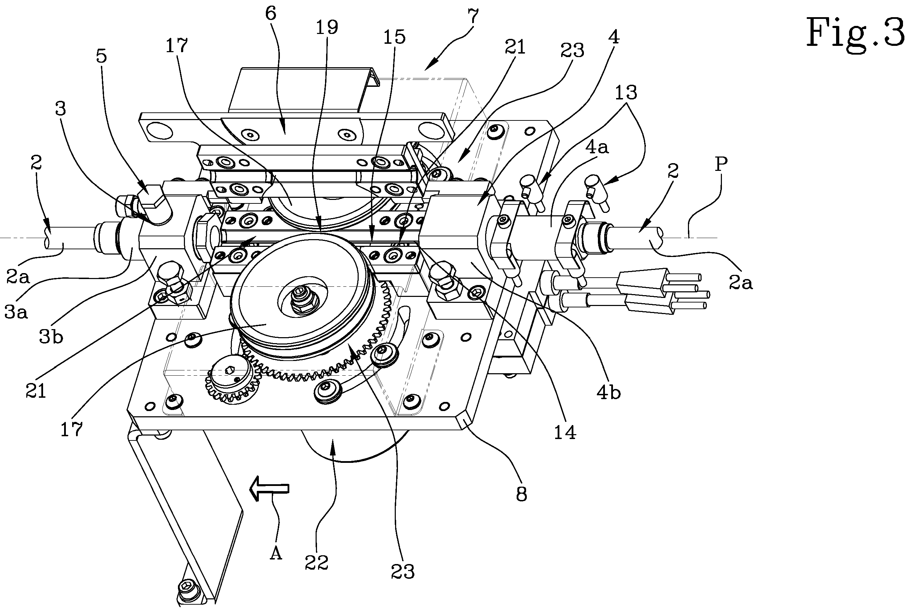

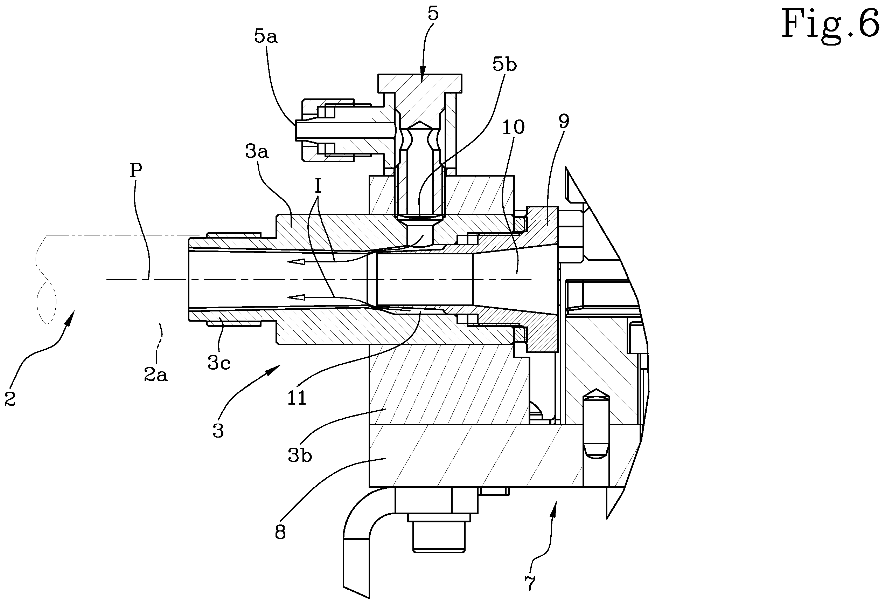

Figure 6 illustrates a detail of the receiving station 3 both in the embodiment of Figure 2 and in the embodiment of Figure 3. Preferably, the funnel 9 comprises an insert which is fixed, preferably screwed, to the receiving station 3 in such a way as to define a receiving channel 10 aligned with the pneumatic duct 2 and an auxiliary channel 11 forming an annular crown disposed around the funnel 9 in communication with the pneumatic duct 2. The injector 5, for example, comprises a nozzle having one end 5a associable with a line for the supply of a compressed fluid, preferably compressed air, and one end 5b leading into the pneumatic duct 2, in particular at the auxiliary channel 11. That way, the flow of compressed fluid injected into the pneumatic duct 2 adopts an injection direction "I" which is substantially axial of the pneumatic duct 2, that is to say, substantially parallel to the path "P".

In a possible embodiment, a control unit 12 (Figure 1) is provided which is operatively connected to the receiving and relaying means, in particular to the injector 5. The control unit 12 may be programmed to make the receiving and relaying means operate continuously. Alternatively, the control unit 12 may be programmed to make the receiving and relaying means operate discontinuously and in phase with the passage of the filters. In this case, sensor means 13, configured to detect the passage and/or the speed of the rod-shaped elements, are provided along the working stretch "O" and/or along the transfer stretch "T". In the embodiments illustrated, the sensor means 13 comprise photocells, for example, and are located at the end of a working stretch "O", preferably at the arrival station 4.

The transfer means 6 define a through cavity 14 interposed between, and aligned with, two consecutive pneumatic ducts 2. The through cavity 14 defines the transfer stretch "T" and is in communication with the outside environment.

As shown in Figure 2, the transfer means 6 comprise at least one transfer duct 15 defined by two shells 16 which are movable relative to each other between a closed configuration (not illustrated) in which they form the through cavity 14 and an open configuration (illustrated for example in Figure 2). The two shells 16 extend substantially the full distance between two consecutive pneumatic ducts 2 and are preferably mounted on the support 8.

In the embodiment illustrated by way of non-limiting example in Figure 3, the transfer means 6 also comprise mechanical elements adapted to interfere with the filters along the transfer stretch "T" to vary the speed of the filters and/or the distance between two consecutive filters. Preferably, these mechanical elements are defined by a pair of rotating elements 17 located on transversely opposite sides of the transfer stretch "T" and mutually opposed at respective side grip portions 18. The side grip portions 18 define at least a portion 19 of the through cavity 14 whose transverse dimensions are suitable for interfering with the filters. More specifically, the rotating elements 17 have respective axes of rotation 20 perpendicular to the path "P" disposed tangentially to the rotating elements themselves at the side grip portions 18. Preferably, the rotating elements 17 are disposed centrally between two consecutive pneumatic ducts 2. More specifically, the portion 19 of the through cavity 14 is a central portion preceded and/or followed by portions 21 aligned with the pneumatic duct upstream and downstream, respectively. This embodiment, too, is provided with the two shells 16 comprising a housing or a break for receiving the rotating elements 17.

The numeral 22 denotes motor means configured to set the rotating elements 17 in rotation at angular speeds suitable for defining, at the respective side grip portions 18, equal tangential speeds in the same direction as the travel direction "A" of the filters, preferably higher than the speed of the filters along the transfer stretch "T", in such a way as to space the filters apart.

In the embodiment illustrated by way of non-limiting example in Figure 3, the transfer means 22 comprise a brushless motor for each rotating element 17 keyed directly to the motor itself.

In a possible embodiment, adjustment means 23 may be provided which are configured to modify the distance between the two side grip portions 18, hence to adjust the size of at least one portion of the through cavity 14. Preferably, the adjustment means 23 comprise rotatable housings 24 mounted on the support 8. Each rotating element 17 is mounted eccentrically on the respective rotatable housing 24. The rotation of the rotatable housings is concatenated, for example by means of one or more gears 25.

In a possible embodiment not illustrated, the transfer means comprise two pairs of rotating elements located along the transfer stretch "T". In this case, the motor means are configured to set the two pairs in rotation at different angular speeds: the angular speed of the pair located upstream is preferably lower than the angular speed of the pair located downstream.

In use, the pneumatic transfer line 1 is adapted to implement a method for pneumatically transferring rod-shaped elements (filters) according to this invention.

In general terms, a sequence of filters is moved in the travel direction "A" along the path "P" defined by a pneumatic transfer line 1. Alternated along that path are working stretches "O", which are independent of each other and in which the filters are fed pneumatically by effect of the expansion of a compressed fluid air), and transfer stretches "T", in which the filters are mechanically guided and transferred from one working stretch to the one immediately following it. In the working stretch "O", the filters are in an environment (pneumatic duct) subjected to a pressure P1 higher than the outside pressure, in particular atmospheric pressure. In the transfer stretch "T", the filters are in an environment at a pressure P2 lower than the pressure P1 and preferably equal to atmospheric pressure.

The method according to the invention thus comprises alternating along the path "P" a step of pneumatically feeding the filters by effect of the expansion of the compressed fluid injected into the pneumatic duct 2 and a step of transferring the filters between two consecutive working stretches "O" along the transfer stretch "T". Preferably, in at least one given time interval during the transfer step, at least one rod-shaped element lies completely along the transfer stretch "T", that is to say, at least one filter is completely outside the pneumatic duct upstream and has not yet entered the pneumatic duct downstream.

Preferably, the compressed fluid (air) is injected into each pneumatic duct 2 at the receiving station 3 to define the working stretch "O" of the path "P" subjected to the pressure P1. As stated above, the transfer along the working stretch "O" is accomplished by effect of the compressed fluid, in particular by the fact that the compressed fluid between one filter and another expands and produces a force that pushes the filter in the travel direction "A".

In a possible embodiment, the step of injecting the compressed fluid can be performed by continuous operation. Alternatively, the step of injecting the compressed fluid can be performed discontinuously and in phase with the passage of the filters. For this purpose, the passage and/or the speed of the filters along the working stretch "O" and/or along the transfer stretch "T" can be detected, for example by the sensor means 13. In this case, the injection of the compressed fluid occurs when a filter is at least partly inserted in the pneumatic duct 2 downstream in such a way as to close the pneumatic duct itself.

Preferably, the filters are handled mechanically along the transfer stretch "T" to vary the speed and/or spacing of the filters. In a possible embodiment, this mechanical handling is accomplished by setting the rotating elements 17 in rotation at angular speeds suitable for defining, at the respective side grip portions 18, equal tangential speeds in the same direction as the travel direction "A" of the filters, preferably higher than the speed of the filters along the transfer stretch "T".

Where two pairs of rotating elements are provided, these are set in rotation at different angular speeds, the angular speed of the pair located upstream being preferably lower than the angular speed of the pair located downstream.

Thus, in a pneumatic transfer line and method according to the invention, the total length of the line can be subdivided into independent stretches of reduced length requiring lower pressure. Preferably, each independent stretch is approximately 30 m long.

## Claims

1. A cigarette making line (100) comprising a pneumatic transfer line (1) for transferring rod-shaped elements, the pneumatic transfer line (1) being configured to move a sequence of rod-shaped elements along a path ("P") in a travel direction ("A"), the pneumatic transfer line comprising: a plurality of pneumatic ducts (2) located in succession along the path ("P"),
wherein each pneumatic duct (2) extends between a respective receiving station (3) and a respective arrival station (4) and defines within it a working stretch ("O") of the path ("P") along which the rod-shaped elements are fed pneumatically by effect of the expansion of a compressed fluid injected into the pneumatic duct (2) itself,
wherein two consecutive working stretches ("O") are alternated with a transfer stretch ("T") of the path ("P") extending between the arrival station (3) of one pneumatic duct (2) and the receiving station (4) of the pneumatic duct (2) located immediately downstream in the travel direction ("A") of the rod-shaped elements, the transfer stretch ("T") being in communication with an environment outside the pneumatic ducts (2),
the cigarette making line being **characterized in that**:
working stretches ("O"), which are independent of each other and in which the rod-shaped elements are fed pneumatically by effect of the expansion of the compressed fluid, and transfer stretches ("T"), in which the rod-shaped elements are mechanically guided and transferred from one working stretch (O) to the one immediately following it, are alternated along the path ("P") whereby the total length of the line (1) is subdivided into independent stretches, the pneumatic transfer line (1) further comprising receiving and relaying means located at each receiving station (3) and configured to receive the rod-shaped elements in sequence, wherein the receiving and relaying means comprise at least one injector (5) configured to inject a compressed fluid into the respective pneumatic duct (2), at the respective receiving station (3);
the pneumatic transfer line (1) further comprising transfer means (6) located along the transfer stretch ("T") and configured at least to mechanically guide the rod-shaped elements; said transfer means (6) defining a through cavity (14) interposed between, and aligned with, two consecutive pneumatic ducts (2), wherein the through cavity (14) defines the transfer stretch ("T") and is in communication with the environment outside the pneumatic ducts (2) and wherein the transfer means (6) comprise at least one transfer duct (15) defined by two shells (16) which are movable relative to each other between a closed configuration in which they form at least a portion of the through cavity (14) and an open configuration.

2. The cigarette making line (100) according to claim 1, **characterized in that** each stretch is 30 m long.

3. The cigarette making line (100) according to claim 1 or 2, **characterized in that** the receiving and relaying means comprise for each receiving station a funnel (9) disposed axially of the pneumatic duct (2) at the respective receiving station (3).

4. The cigarette making line (100) according to claim 3, **characterized in that** the injector (5) is located downstream of the funnel (9) in the travel direction ("A") of the rod-shaped elements.

5. The cigarette making line (100) according to claim 3 or 4, wherein the funnel (9) comprises an insert which is fixed to the receiving station (3) in such a way as to define a receiving channel (10) aligned with the pneumatic duct (2) and an auxiliary channel (11) forming an annular crown disposed around the funnel (9), in communication with the injector (5) and with the pneumatic duct (2) so that the flow of compressed fluid injected into the pneumatic duct (2) follows an injection direction ("I") which is substantially axial of the pneumatic duct (2).

6. The cigarette making line (100) according to one or more of claims 1 to 5, **characterized in that** it comprises a control unit (12) which is operatively connected to the receiving and relaying means and programmed to make the receiving and relaying means operate continuously.

7. The cigarette making line (100) according to one or more of claims 1 to 5, **characterized in that** it comprises a control unit (12) which is operatively connected to the receiving and relaying means and programmed to make the receiving and relaying means operate discontinuously and in phase with the passage of the rod-shaped elements.

8. The cigarette making line (100) according to one or more of the preceding claims, **characterized in that** it comprises sensor means (13) located along the working stretch ("O") and/or along the transfer stretch ("T") and configured to detect the passage and/or the speed of the rod-shaped elements.

9. The cigarette making line (100) according to one or more of claims 9 to 11, **characterized in that** the transfer means (6) comprise mechanical elements adapted to interfere with the rod-shaped elements along the transfer stretch ("T") to vary the speed of the rod-shaped elements and/or the distance between two consecutive rod-shaped elements.

10. The cigarette making line (100) according to any of the preceding claims, **characterized in that** the transfer means (6) comprise:
at least one pair of rotating elements (17) located on transversely opposite sides of the transfer stretch ("T") and mutually opposed at respective side grip portions (18) defining at least a portion (19) of the through cavity (14) whose transverse dimensions are suitable for interfering with the rod-shaped elements, and
motor means (22) configured to set the rotating elements (17) in rotation at angular speeds suitable for defining, at the respective side grip portions (18), equal tangential speeds in the same direction as the travel direction ("A") of the rod-shaped elements.

11. The cigarette making line (100) according to claim 10, **characterized in that** the transfer means (6) comprise two pairs of rotating elements (17) located along the transfer stretch ("T") and **in that** the motor means (22) are configured to set the pairs in rotation at different angular speeds, the angular speed of the pair located upstream being preferably lower than the angular speed of the pair located downstream.

12. A pneumatic transfer method for transferring rod-shaped elements used in making cigarettes, **characterized in that** the method is to be carried out by a cigarette making line according to one or more of claims 1-11, wherein a sequence of rod-shaped elements is moved in a travel direction ("A") along a path ("P") defined by a pneumatic transfer line (1), the method further comprising:
alternating along the path ("P") a step of pneumatically feeding the rod-shaped elements by effect of the expansion of a compressed fluid injected into a pneumatic duct (2) defining a working stretch ("O") of the path ("P") and a step of transferring the rod-shaped elements between two consecutive working stretches ("O") along a transfer stretch ("T") of the path ("P") in communication with an environment outside the pneumatic ducts (2);
preparing a plurality of pneumatic ducts (2) located in succession along the path ("P"), wherein each pneumatic duct (2) extends between a receiving station (3) and an arrival station (4),
injecting a compressed fluid into each pneumatic duct (2) at each receiving station (3),
transferring the rod-shaped elements from the arrival station (4) of one pneumatic duct (2) to the receiving station (3) of the pneumatic duct (2) located immediately downstream in the travel direction ("A") of the rod-shaped elements, guiding them mechanically along the transfer stretch ("T").

13. The pneumatic transfer method according to claim 12, **characterized in that** the step of injecting a compressed fluid into each pneumatic duct (2) is performed by continuous operation.

14. The pneumatic transfer method according to claim 12, **characterized in that** the step of injecting a compressed fluid into each pneumatic duct (2) is performed by discontinuous operation and in phase with the passage of the rod-shaped elements.

15. The pneumatic transfer method according to one or more of claims 12-14, **characterized in that** it comprises the step of detecting the passage and/or the speed of the rod-shaped elements along the working stretch ("O") and/or along the transfer stretch ("T").

16. The pneumatic transfer method according to one or more of claims 12 to 15, **characterized in that** it comprises the step of mechanically interfering with the rod-shaped elements along the transfer stretch ("T") to vary the speed of the rod-shaped elements and/or the distance between two consecutive rod-shaped elements.

17. The pneumatic transfer method according to claim 16, **characterized in that** the step of mechanically interfering with the rod-shaped elements comprises:
preparing at least one pair of rotating elements (17) located on transversely opposite sides of the transfer stretch ("T") and mutually opposed at respective side grip portions (18) defining at least a portion (19) of a through cavity (14) whose transverse dimensions are suitable for interfering with the rod-shaped elements, and
setting the rotating elements (17) in rotation at angular speeds suitable for defining, at the respective side grip portions (18), equal tangential speeds in the same direction as the travel direction ("A") of the rod-shaped elements.

18. The pneumatic transfer method according to claim 17, **characterized in that** it comprises setting the rotating elements (17) in rotation at angular speeds suitable for defining, at the respective side grip portions (18), tangential speeds greater than the speed of the rod-shaped elements along the transfer stretch ("T").

19. The pneumatic transfer method according to claim 17 or 18, **characterized in that** the step of mechanically interfering with the rod-shaped elements comprises:
preparing two pairs of rotating elements along the transfer stretch ("T"), and
setting the pairs of rotating elements in rotation at different angular speeds, the angular speed of the pair located upstream being preferably lower than the angular speed of the pair located downstream.

20. The pneumatic transfer method according to one or more of claims 12 to 19, **characterized in that** in at least one given time interval during the transfer step, at least one rod-shaped element lies completely along the transfer stretch ("T").

## Patentansprüche

1. Zigarettenfertigungslinie (100), umfassend eine pneumatische Transferlinie (1) zum Transferieren von stabförmigen Elementen, wobei die pneumatische Transferlinie (1) konfiguriert ist, um eine Abfolge von stabförmigen Elementen entlang eines Wegs ("P") in eine Vorschubrichtung ("A") zu bewegen, wobei die pneumatische Transferlinie umfasst:
eine Vielzahl von pneumatischen Leitungen (2), die nacheinander entlang des Wegs ("P") angeordnet sind,
wobei sich eine jede pneumatische Leitung (2) zwischen einer jeweiligen Empfangsstation (3) und einer jeweiligen Ankunftsstation (4) erstreckt und darin ein Bearbeitungsteilstück ("O") des Wegs ("P") definiert, entlang dessen die stabförmigen Elemente pneumatisch durch die Wirkung der Ausdehnung eines komprimierten Fluids zugeführt werden, das in die pneumatische Leitung (2) eingespritzt wird,
wobei zwei aufeinanderfolgende Bearbeitungsteilstücke ("O") mit einem Transferteilstück ("T") des Wegs ("P") abgewechselt werden, der sich zwischen der Ankunftsstation (3) einer pneumatischen Leitung (2) und der Empfangsstation (4) der pneumatischen Leitung (2) erstreckt, die sich unmittelbar danach in Vorschubrichtung ("A") der stabförmigen Elemente befindet, wobei das Transferteilstück ("T") in Kommunikation mit einer Umgebung außerhalb der pneumatischen Leitungen (2) ist,
wobei die Zigarettenfertigungslinie **dadurch gekennzeichnet ist, dass**
Bearbeitungsteilstücke ("O"), die unabhängig voneinander sind und in die die stabförmigen Elemente pneumatisch durch die Wirkung der Ausdehnung des komprimierten Fluids zugeführt werden, und Transferteilstücke ("T"), in denen die stabförmigen Elemente mechanisch geführt und von einem Bearbeitungsteilstück (O) zum unmittelbar auf diesen folgenden transferiert werden, entlang des Wegs ("P") abgewechselt sind, wodurch die Gesamtlänge der Linie (1) in unabhängige Teilstücke unterteilt ist, wobei die pneumatische Transferlinie (1) zudem Empfangs- und Weitergabemittel umfasst, die an jeder Empfangsstation (3) angeordnet und konfiguriert sind, um die stabförmigen Elemente nacheinander zu empfangen, wobei die Empfangs- und Weitergabemittel mindestens einen Injektor (5) umfassen, der konfiguriert ist, um ein komprimiertes Fluid in die jeweilige pneumatische Leitung (2) an der jeweiligen Empfangsstation (3) einzuspritzen,
wobei die pneumatische Transferlinie (1) zudem Transfermittel (6) umfasst, die entlang des Transferteilstücks ("T") angeordnet und konfiguriert sind, um die stabförmigen Elemente zumindest mechanisch zu führen, wobei die Transfermittel (6) einen Durchführungshohlraum (14) definieren, der zwischen zwei aufeinanderfolgenden pneumatischen Leitungen (2) eingesetzt und mit diesen ausgerichtet ist, wobei der Durchführungshohlraum (14) das Transferteilstück ("T") definiert und mit der Umgebung außerhalb der pneumatischen Leitungen (2) in Kommunikation ist, und wobei die Transfermittel (6) mindestens eine Transferleitung (15) umfassen, die durch zwei Hüllen (16) definiert ist, die relativ zueinander zwischen einer geschlossenen Konfiguration, in der sie mindestens einen Abschnitt des Durchführungshohlraums (14) formen, und einer offenen Konfiguration bewegbar sind.

2. Zigarettenfertigungslinie (100) nach Anspruch 1, **dadurch gekennzeichnet, dass** ein jedes Teilstück 30 m lang ist.

3. Zigarettenfertigungslinie (100) nach Anspruch 1 oder 2, **dadurch gekennzeichnet, dass** die Empfangs- und Weitergabemittel für jede Empfangsstation einen Schacht (9) umfassen, der axial der pneumatischen Leitung (2) an der jeweiligen Empfangsstation (3) angeordnet ist.

4. Zigarettenfertigungslinie (100) nach Anspruch 3, **dadurch gekennzeichnet, dass** der Injektor (5) nach dem Schacht (9) in Vorschubrichtung ("A") der stabförmigen Elemente angeordnet ist.

5. Zigarettenfertigungslinie (100) nach Anspruch 3 oder 4, wobei der Schacht (9) einen Einsatz umfasst, der an der Empfangsstation (3) fixiert ist, sodass er einen Aufnahmekanal (10) definiert, der mit der pneumatischen Leitung (2) ausgerichtet ist, und einen Hilfskanal (11), formend eine ringförmige Krone, die rund um den Schacht (9) angeordnet ist, in Kommunikation mit dem Injektor (5) und mit der pneumatischen Leitung (2), sodass die Strömung des in die pneumatische Leitung (2) eingespritzten komprimierten Fluids einer Injektionsrichtung ("I") folgt, die im Wesentlichen axial der pneumatischen Leitung (2) verläuft.

6. Zigarettenfertigungslinie (100) nach einem oder mehreren der Ansprüche 1 bis 5, **dadurch gekennzeichnet, dass** sie eine Steuerungseinheit (12) umfasst, die betriebswirksam mit den Empfangs- und Weitergabemitteln verbunden und programmiert ist, um dafür zu sorgen, dass die Empfangs- und Weitergabemittel unterbrechungslos arbeiten.

7. Zigarettenfertigungslinie (100) nach einem oder mehreren der Ansprüche 1 bis 5, **dadurch gekennzeichnet, dass** sie eine Steuerungseinheit (12) umfasst, die betriebswirksam mit den Empfangs- und Weitergabemitteln verbunden und programmiert ist, um dafür zu sorgen, dass die Empfangs- und Weitergabemittel mit Unterbrechungen und im Takt mit dem Durchgang der stabförmigen Elemente arbeiten.

8. Zigarettenfertigungslinie (100) nach einem oder mehreren der vorhergehenden Ansprüche, **dadurch gekennzeichnet, dass** sie Sensormittel (13) umfasst, die entlang des Bearbeitungsteilstücks ("O") und/oder entlang des Transferteilstücks ("T") angeordnet und konfiguriert sind, um den Durchgang und/oder die Geschwindigkeit der stabförmigen Elemente zu erfassen.

9. Zigarettenfertigungslinie (100) nach einem oder mehreren der Ansprüche 9 bis 11, **dadurch gekennzeichnet, dass** die Transfermittel (6) mechanische Elemente umfassen, die ausgelegt sind, um mit den stabförmigen Elementen entlang des Transferteilstücks ("T") zu interferieren, um die Geschwindigkeit der stabförmigen Elemente und/oder den Abstand zwischen zwei aufeinanderfolgenden stabförmigen Elementen zu variieren.

10. Zigarettenfertigungslinie (100) nach einem der vorhergehenden Ansprüche, **dadurch gekennzeichnet, dass** die Transfermittel (6) umfassen:
mindestens ein Paar Rotationselemente (17), die sich an quer entgegengesetzten Seiten des Transferteilstücks ("T") befinden und gegenseitig entgegengesetzt an jeweiligen Seitengreifabschnitten (18) angeordnet sind, definierend mindestens einen Abschnitt (19) des Durchführungshohlraums (14), dessen Querabmessungen geeignet sind, um mit den stabförmigen Elementen zu interferieren, und
Motormittel (22), die konfiguriert sind, um die Rotationselemente (17) bei Winkelgeschwindigkeiten in Drehung zu versetzen, die geeignet sind, um an den jeweiligen Seitengreifabschnitten (18) gleiche Tangentialgeschwindigkeiten in derselben Richtung wie der Vorschubrichtung ("A") der stabförmigen Elemente zu definieren.

11. Zigarettenfertigungslinie (100) nach Anspruch 10, **dadurch gekennzeichnet, dass** die Transfermittel (6) zwei Paar Rotationselemente (17) umfassen, die entlang des Transferteilstücks ("T") angeordnet sind, und dass die Motormittel (22) konfiguriert sind, um die Paare bei verschiedenen Winkelgeschwindigkeiten in Drehung zu versetzen, wobei die Winkelgeschwindigkeit des stromaufwärts befindlichen Paars vorzugsweise geringer ist als die Winkelgeschwindigkeit des stromabwärts befindlichen Paars.

12. Pneumatisches Transferverfahren zum Transferieren von stabförmigen Elementen bei der Zigarettenherstellung, **dadurch gekennzeichnet, dass** das Verfahren von einer Zigarettenfertigungslinie nach einem oder mehreren der Ansprüche 1-11 durchgeführt wird, wobei eine Abfolge von stabförmigen Elementen in eine Vorschubrichtung ("A") entlang eines Wegs ("P") bewegt wird, definiert durch eine pneumatische Transferlinie (1),
wobei das Verfahren zudem umfasst:
Abwechseln entlang des Wegs ("P") eines Schritts zum pneumatischen Zuführen der stabförmigen Elemente durch die Wirkung der Ausdehnung eines in eine pneumatische Leitung (2) eingespritzten komprimierten Fluids, definierend ein Bearbeitungsteilstück ("O") des Wegs ("P"), und eines Schritts zum Transferieren der stabförmigen Elemente zwischen zwei aufeinanderfolgenden Teilstücken ("O") entlang eines Transferteilstücks ("T") des Wegs ("P") in Kommunikation mit einer Umgebung außerhalb der pneumatischen Leitungen (2);
Vorbereiten einer Vielzahl von pneumatischen Leitungen (2), die nacheinander entlang des Wegs ("P") angeordnet sind, wobei sich eine jede pneumatische Leitung (2) zwischen einer Empfangsstation (3) und einer Ankunftsstation (4) erstreckt;
Einspritzen eines komprimierten Fluids in eine jede pneumatische Leitung (2) an einer jeden Empfangsstation (3) ;
Transferieren der stabförmigen Elemente von der Ankunftsstation (4) einer pneumatischen Leitung (2) an die Empfangsstation (3) der pneumatischen Leitung (2), die sich unmittelbar danach in Vorschubrichtung ("A") der stabförmigen Elemente befindet, wobei diese entlang des Transferteilstücks ("T") mechanisch geführt werden.

13. Pneumatisches Transferverfahren nach Anspruch 12, **dadurch gekennzeichnet, dass** der Schritt zum Einspritzen eines komprimierten Fluids in eine jede pneumatische Leitung (2) im Dauerbetrieb durchgeführt wird.

14. Pneumatisches Transferverfahren nach Anspruch 12, **dadurch gekennzeichnet, dass** der Schritt zum Einspritzen eines komprimierten Fluids in eine jede pneumatische Leitung (2) mit Unterbrechungen und im Takt mit dem Durchgang der stabförmigen Elemente durchgeführt wird.

15. Pneumatisches Transferverfahren nach einem oder mehreren der Ansprüche 12-14, **dadurch gekennzeichnet, dass** es den Schritt zum Erfassen des Durchgangs und/oder der Geschwindigkeit der stabförmigen Elemente entlang des Bearbeitungsteilstücks ("O") und/oder entlang des Transferteilstücks ("T") umfasst.

16. Pneumatisches Transferverfahren nach einem oder mehreren der Ansprüche 12 bis 15, **dadurch gekennzeichnet, dass** es den Schritt zum mechanischen Interferieren mit den stabförmigen Elementen entlang des Transferteilstücks ("T") umfasst, um die Geschwindigkeit der stabförmigen Elemente und/oder den Abstand zwischen zwei aufeinanderfolgenden stabförmigen Elementen zu variieren.

17. Pneumatisches Transferverfahren nach Anspruch 16, **dadurch gekennzeichnet, dass** der Schritt zum mechanischen Interferieren mit den stabförmigen Elementen Folgendes umfasst:
Vorbereiten von mindestens einem Paar von Rotationselementen (17), die sich an quer entgegengesetzten Seiten des Transferteilstücks ("T") befinden und gegenseitig entgegengesetzt an jeweiligen Seitengreifabschnitten (18) angeordnet sind, definierend mindestens einen Abschnitt (19) eines Durchführungshohlraums (14), dessen Querabmessungen geeignet sind, um mit den stabförmigen Elementen zu interferieren, und
Versetzen der Rotationselemente (17) in Drehung bei Winkelgeschwindigkeiten, die geeignet sind, um an den jeweiligen Seitengreifabschnitten (18) gleiche Tangentialgeschwindigkeiten in derselben Richtung wie der Vorschubrichtung ("A") der stabförmigen Elemente zu definieren.

18. Pneumatisches Transferverfahren nach Anspruch 17, **dadurch gekennzeichnet, dass** es das Versetzen der Rotationselemente (17) in Drehung bei Winkelgeschwindigkeiten umfasst, die geeignet sind, um an den jeweiligen Seitengreifabschnitten (18) Tangentialgeschwindigkeiten zu definieren, die größer sind als die Geschwindigkeit der stabförmigen Elemente entlang des Transferteilstücks ("T").

19. Pneumatisches Transferverfahren nach Anspruch 17 oder 18, **dadurch gekennzeichnet, dass** der Schritt zum mechanischen Interferieren mit den stabförmigen Elementen umfasst:
Vorbereiten von zwei Paar von Rotationselementen entlang des Transferteilstücks ("T") und
Versetzen der Paare von Rotationselementen in Drehung bei unterschiedlichen Winkelgeschwindigkeiten, wobei die Winkelgeschwindigkeit des Paars, das stromaufwärts angeordnet ist, vorzugsweise geringer ist als die Winkelgeschwindigkeit des Paars, das stromabwärts angeordnet ist.

20. Pneumatisches Transferverfahren nach einem oder mehreren der Ansprüche 12 bis 19, **dadurch gekennzeichnet, dass** mindestens ein stabförmiges Element in mindestens einem vorgegebenen Zeitintervall während des Transferschritts komplett entlang des Transferteilstücks ("T") liegt.

## Revendications

1. Ligne de fabrication de cigarettes (100) comprenant une ligne de transfert pneumatique (1) servant à transférer des éléments en forme de tige, la ligne de transfert pneumatique (1) étant configurée pour déplacer une séquence d'éléments en forme de tige le long d'un parcours (« P ») dans une direction de déplacement (« A »), la ligne de transfert pneumatique comprenant :
une pluralité de conduits pneumatiques (2) situés en succession le long du parcours (« P »),
dans laquelle chaque conduit pneumatique (2) se prolonge entre un poste de réception (3) respectif et un poste d'arrivée (4) respectif et définit en son sein une portion de travail (« O ») du parcours (« P ») le long duquel les éléments en forme de tige sont alimentés pneumatiquement par l'effet de la dilatation d'un fluide comprimé injecté dans le conduit pneumatique (2) lui-même,
dans laquelle deux portions de travail (« O ») consécutives sont alternées avec une portion de transfert (« T ») du parcours (« P ») se prolongeant entre le poste d'arrivée (3) d'un conduit pneumatique (2) et le poste de réception (4) du conduit pneumatique (2) situé immédiatement en aval dans la direction de déplacement (« A ») des éléments en forme de tige, la portion de transfert (« T ») étant en communication avec un environnement extérieur aux conduits pneumatiques (2),
la ligne de fabrication de cigarettes étant **caractérisée en ce que** :
des portions de travail (« O ») qui sont indépendantes les unes des autres et dans lesquelles les éléments en forme de tige sont alimentés pneumatiquement par l'effet de la dilatation du fluide comprimé, et des portions de transfert (« T »), dans lesquelles les éléments en forme de tige sont guidés mécaniquement et transférés d'une portion de travail (O) à celle qui la suit immédiatement, sont alternés le long du parcours (« P »), la longueur totale de la ligne (1) étant ainsi subdivisée en portions indépendantes, la ligne de transfert pneumatique (1) comprenant de plus des moyens de réception et de relais situés en correspondance de chaque poste de réception (3) et configurés pour recevoir les éléments en forme de tige en séquence, dans laquelle les moyens de réception et de relais comprennent au moins un injecteur (5) configuré pour injecter un fluide comprimé dans le conduit pneumatique (2) respectif, en correspondance du poste de réception (3) respectif ;
la ligne de transfert pneumatique (1) comprenant de plus des moyens de transfert (6) situés le long de la portion de transfert (« T ») et configurés au moins pour guider mécaniquement les éléments en forme de tige ; lesdits moyens de transfert (6) définissant une cavité traversante (14) interposée entre, et alignée avec, deux conduits pneumatiques (2) consécutifs, dans laquelle la cavité traversante (14) définit la portion de transfert (« T ») et est en communication avec l'environnement extérieur aux conduits pneumatiques (2) et dans laquelle les moyens de transfert (6) comprennent au moins un conduit de transfert (15) défini par deux coques (16) étant mobiles l'une par rapport à l'autre entre une configuration de fermeture dans laquelle elles forment au moins une partie de la cavité traversante (14) et une configuration d'ouverture.

2. Ligne de fabrication de cigarettes (100) selon la revendication 1, **caractérisée en ce que** chaque portion mesure 30 m de longueur.

3. Ligne de fabrication de cigarettes (100) selon la revendication 1 ou 2, **caractérisée en ce que** les moyens de réception et de relais comprennent, pour chaque poste de réception, un entonnoir (9) disposé axialement par rapport au conduit pneumatique (2) en correspondance du poste de réception (3) respectif.

4. Ligne de fabrication de cigarettes (100) selon la revendication 3, **caractérisée en ce que** l'injecteur (5) est situé en aval de l'entonnoir (9) dans la direction de déplacement (« A ») des éléments en forme de tige.

5. Ligne de fabrication de cigarettes (100) selon la revendication 3 ou 4, dans laquelle l'entonnoir (9) comprend un insert étant fixé au poste de réception (3) de manière à définir un canal de réception (10) aligné avec le conduit pneumatique (2) et un canal auxiliaire (11) formant une couronne annulaire disposée autour de l'entonnoir (9), en communication avec l'injecteur (5) et avec le conduit pneumatique (2) de sorte que le flux de fluide comprimé injecté dans le conduit pneumatique (2) suit une direction d'injection (« I ») étant substantiellement axiale par rapport au conduit pneumatique (2).

6. Ligne de fabrication de cigarettes (100) selon une ou plusieurs des revendications 1 à 5, **caractérisée en ce qu'**elle comprend une unité de commande (12) étant reliée de manière fonctionnelle aux moyens de réception et de relais et programmée pour faire fonctionner les moyens de réception et de relais de manière continue.

7. Ligne de fabrication de cigarettes (100) selon une ou plusieurs des revendications 1 à 5, **caractérisée en ce qu'**elle comprend une unité de commande (12) étant reliée de manière fonctionnelle aux moyens de réception et de relais et programmée pour faire fonctionner les moyens de réception et de relais de manière discontinue et en phase avec le passage des éléments en forme de tige.

8. Ligne de fabrication de cigarettes (100) selon une ou plusieurs des revendications précédentes, **caractérisée en ce qu'**elle comprend des moyens de détection (13) situés le long de la portion de travail (« O ») et/ou le long de la portion de transfert (« T ») et configurés pour détecter le passage et/ou la vitesse des éléments en forme de tige.

9. Ligne de fabrication de cigarettes (100) selon une ou plusieurs des revendications 9 à 11, **caractérisée en ce que** les moyens de transfert (6) comprennent des éléments mécaniques adaptés pour interférer avec les éléments en forme de tige le long de la portion de transfert (« T ») pour faire varier la vitesse des éléments en forme de tige et/ou la distance entre deux éléments en forme de tige consécutifs.

10. Ligne de fabrication de cigarettes (100) selon l'une quelconque des revendications précédentes, **caractérisée en ce que** les moyens de transfert (6) comprennent :
au moins une paire d'éléments rotatifs (17) situés sur des côtés transversalement opposés de la portion de transfert (« T ») et mutuellement opposés en correspondance de parties de préhension latérales (18) respectives définissant au moins une partie (19) de la cavité traversante (14) dont les dimensions transversales sont adaptées pour interférer avec les éléments en forme de tige, et
des moyens moteurs (22) configurés pour mettre les éléments rotatifs (17) en rotation à des vitesses angulaires adaptées pour définir, en correspondance des parties de préhension latérales (18) respectives, des vitesses tangentielles égales dans la même direction que la direction de déplacement (« A ») des éléments en forme de tige.

11. Ligne de fabrication de cigarettes (100) selon la revendication 10, **caractérisée en ce que** les moyens de transfert (6) comprennent deux paires d'éléments rotatifs (17) situés le long de la portion de transfert (« T ») et **en ce que** les moyens moteurs (22) sont configurés pour mettre les paires en rotation à des vitesses angulaires différentes, la vitesse angulaire de la paire située en amont étant de préférence inférieure à la vitesse angulaire de la paire située en aval.

12. Méthode de transfert pneumatique servant à transférer des éléments en forme de tige utilisés dans la fabrication de cigarettes, **caractérisée en ce que** la méthode doit être effectuée par une ligne de fabrication de cigarettes selon une ou plusieurs des revendications 1-11, dans laquelle une séquence d'éléments en forme de tige est déplacée dans une direction de déplacement (« A ») le long d'un parcours (« P ») défini par une ligne de transfert pneumatique (1),
la méthode comprenant de plus :
alterner le long du parcours (« P ») une étape d'alimentation pneumatique des éléments en forme de tige par l'effet de la dilatation d'un fluide comprimé injecté dans un conduit pneumatique (2) définissant une portion de travail (« O ») du parcours (« P ») et une étape de transfert des éléments en forme de tige entre deux portions de travail (« O ») consécutives le long d'une portion de transfert (« T ») du parcours (« P ») en communication avec un environnement extérieur aux conduits pneumatiques (2) ;
préparer une pluralité de conduits pneumatiques (2) situés successivement le long du parcours (« P »), dans laquelle chaque conduit pneumatique (2) se prolonge entre un poste de réception (3) et un poste d'arrivée (4),
injecter un fluide comprimé dans chaque conduit pneumatique (2) en correspondance de chaque poste de réception (3),
transférer les éléments en forme de tige du poste d'arrivée (4) d'un conduite pneumatique (2) vers le poste de réception (3) du conduit pneumatique (2) situé immédiatement en aval dans la direction de déplacement (« A ») des éléments en forme de tige, en les guidant mécaniquement le long de la portion de transfert (« T ») .

13. Méthode de transfert pneumatique selon la revendication 12, **caractérisée en ce que** l'étape consistant à injecter un fluide comprimé dans chaque conduit pneumatique (2) est réalisée par un fonctionnement continu.

14. Méthode de transfert pneumatique selon la revendication 12, **caractérisée en ce que** l'étape consistant à injecter un fluide comprimé dans chaque conduit pneumatique (2) est réalisée par un fonctionnement discontinu et en phase avec le passage des éléments en forme de tige.

15. Méthode de transfert pneumatique selon une ou plusieurs des revendications 12-14, **caractérisée en ce qu'**elle comprend l'étape consistant à détecter le passage et/ou la vitesse des éléments en forme de tige le long de la portion de travail (« O ») et/ou le long de la portion de transfert (« T »).

16. Méthode de transfert pneumatique selon une ou plusieurs des revendications 12 à 15, **caractérisée en ce qu'**elle comprend l'étape consistant à interférer mécaniquement avec les éléments en forme de tige le long de la portion de transfert (« T ») pour faire varier la vitesse des éléments en forme de tige et/ou la distance entre deux éléments en forme de tige consécutifs.

17. Méthode de transfert pneumatique selon la revendication 16, **caractérisée en ce que** l'étape consistant à interférer mécaniquement avec les éléments en forme de tige comprend :
préparer au moins une paire d'éléments rotatifs (17) situés sur des côtés transversalement opposés de la portion de transfert (« T ») et mutuellement opposés en correspondance de parties de préhension latérales (18) respectives définissant au moins une partie (19) d'une cavité traversante (14) dont les dimensions transversales sont adaptées pour interférer avec les éléments en forme de tige, et
mettre les éléments rotatifs (17) en rotation à des vitesses angulaires adaptées pour définir, en correspondance des parties de préhension latérales (18) respectives, des vitesses tangentielles égales dans la même direction que la direction de déplacement (« A ») des éléments en forme de tige.

18. Méthode de transfert pneumatique selon la revendication 17, **caractérisée en ce qu'**elle comprend la mise en rotation des éléments rotatifs (17) à des vitesses angulaires adaptées pour définir, en correspondance des parties de préhension latérales (18) respectives, des vitesses tangentielles supérieures à la vitesse des éléments en forme de tige le long de la portion de transfert (« T »).

19. Méthode de transfert pneumatique selon la revendication 17 ou 18, **caractérisée en ce que** l'étape consistant à interférer mécaniquement avec les éléments en forme de tige comprend :
préparer deux paires d'éléments rotatifs le long de la portion de transfert (« T »), et
mettre en rotation les paires d'éléments rotatifs à des vitesses angulaires différentes, la vitesse angulaire de la paire située en amont étant de préférence inférieure à la vitesse angulaire de la paire située en aval.

20. Méthode de transfert pneumatique selon une ou plusieurs des revendications 12 à 19, **caractérisée en ce que** dans au moins un intervalle de temps donné pendant l'étape de transfert, au moins un élément en forme de tige repose complètement le long de la portion de transfert (« T »).
